(19)

Europäisches Patentamt
European Patent Office
Office européen des brevets

(11) **EP 3 447 983 B1**

(12) **EUROPEAN PATENT SPECIFICATION**

(45) Date of publication and mention
of the grant of the patent:
**19.04.2023 Bulletin 2023/16**

(21) Application number: **17785260.5**

(22) Date of filing: **27.02.2017**

(51) International Patent Classification (IPC):
$H04L\ 27/26^{(2006.01)}$ $H04B\ 7/08^{(2006.01)}$

(52) Cooperative Patent Classification (CPC):
**H04B 7/086; H04L 27/26; H04L 27/2647**

(86) International application number:
**PCT/CN2017/075071**

(87) International publication number:
**WO 2017/181774 (26.10.2017 Gazette 2017/43)**

(54) **DIAGONAL LOADING METHOD, DEVICE, AND COMPUTER STORAGE MEDIUM**

DIAGONALES LADEVERFAHREN, VORRICHTUNG SOWIE COMPUTERSPEICHERMEDIUM

PROCÉDÉ DE CHARGEMENT DIAGONAL, DISPOSITIF ET SUPPORT DE STOCKAGE INFORMATIQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **21.04.2016 CN 201610255649**

(43) Date of publication of application:
**27.02.2019 Bulletin 2019/09**

(73) Proprietor: **ZTE Corporation
Shenzhen, Guangdong 518057 (CN)**

(72) Inventors:
• **WU, Hao
Shenzhen, Guangdong 518057 (CN)**
• **LI, Jing
Shenzhen, Guangdong 518057 (CN)**

(74) Representative: **Wallinger Ricker Schlotter
Tostmann
Patent- und Rechtsanwälte mbB
Zweibrückenstraße 5-7
80331 München (DE)**

(56) References cited:
**WO-A1-2012/057666     CN-A- 102 944 870
CN-A- 103 155 440      CN-A- 104 199 053
CN-A- 104 360 338      US-A1- 2009 180 455
US-A1- 2009 310 724**

• **LILJA P ET AL: "Robust Adaptive Beamforming in Software Defined Radio with Adaptive Diagonal Loading", MILITARY COMMUNICATIONS CONFERENCE, 2005. MILCOM 2005. IEEE ATLANTIC CITY, NJ, USA 17-20 OCT. 2005, PISCATAWAY, NJ, USA,IEEE, PISCATAWAY, NJ, USA, 17 October 2005 (2005-10-17), pages 1-6, XP010901625, DOI: 10.1109/MILCOM.2005.1606058 ISBN: 978-0-7803-9393-6**
• **KALSON S: "Adaptive detection with diagonal loading (for adaptive antenna array)", 19900403; 19900403 - 19900406, 3 April 1990 (1990-04-03), pages 1369-1372, XP010641841,**
• **NING MA ET AL: "Efficient method to determine diagonal loading value", PROCEEDINGS OF INTERNATIONAL CONFERENCE ON ACOUSTICS, SPEECH AND SIGNAL PROCESSING (ICASSP'03) 6-10 APRIL 2003 HONG KONG, CHINA; [IEEE INTERNATIONAL CONFERENCE ON ACOUSTICS, SPEECH, AND SIGNAL PROCESSING (ICASSP)], IEEE, 2003 IEEE INTERNATIONAL CONFE, vol. 5, 6 April 2003 (2003-04-06), pages V_341-V_344, XP010639278, DOI: 10.1109/ICASSP.2003.1199948 ISBN: 978-0-7803-7663-2**

EP 3 447 983 B1

## Description

## TECHNICAL FIELD

The disclosure relates to an orthogonal frequency division multiplexing system in the field of communications, and more particularly to a diagonal loading method and device, and a computer storage medium.

## BACKGROUND

With the increase of network capacity, the maintenance of network quality is increasingly dependent on rejecting interference problems. Interference Rejection Combining (IRC) uses a weight matrix to linearly combine signals received by different antennas to suppress interference caused by channel correlation. As the number of receiving antennas is increasing, the interference rejection capability is stronger. Therefore, IRC may greatly improve the receiving quality of signals.

The IRC needs to estimate a noise matrix, and the estimation accuracy of the noise matrix directly affects the performance of interference rejection. In the related art, the estimation accuracy of the noise matrix is improved by diagonal loading, but the specific value of diagonal loading is not well determined in the related art.

The article "Robust Adaptive Beamforming in Software Defined Radio with Adaptive Diagonal Loading", MILITARY COMMUNICATIONS CONFERENCE, 2005. MILCOM 2005. IEEE ATLANTIC CITY, NJ, USA 17-20 OCT. 2005, PISCATAWAY, NJ, USA,IEEE, PISCATAWAY, NJ, USA, (20051017), doi:10.1109IMILCOM.2005.1606058, ISBN 978-0-7803-9393-6, pages 1 - 6, provides a Robust Adaptive Beamforming in Software Defined Radio with Adaptive Diagonal Loading.

US 2009/310724 A1 discloses interference mitigation for devices with multiple receivers.

The article "Adaptive detection with diagonal loading", of S. Kalson, Lincoln Laboratory, MIT, Lexington Ma 02173, IEEE, 1990, provides an adaptive detection method.

WO 2012/057666 A1 discloses a method and arrangement for interference mitigation.

The article "Efficient method to determine diagonal value", PROCEEDINGS OF INTERNATIONAL CONFERENCE ON ACOUSTICS, SPEECH AND SIGNAL PROCESSING (ICASSP'03) 6-10 APRIL 2003 HONG KONG, CHINA;, IEEE, 2003 IEEE INTERNATIONAL CONFE, (20030406), vol. 5, doi:10.1109/ICASSP.2003.1199948, ISBN 978-0-7803-7663-2,, provides an efficient method to determine diagonal value.

## SUMMARY

In order to solve the existing technical problem, the embodiments of the disclosure provide a diagonal loading method and device, and a computer storage medium.

The technical solution of the embodiments of the disclosure is implemented as follows.

An embodiment of the disclosure provides a diagonal loading method. The method includes the operations as follows.

A noise vector is determined according to a received pilot signal.

A noise matrix is determined according to the noise vector.

A diagonal loading coefficient is determined according to a noise power and an interference power at a position where a user is located, a value obtained from dividing the interference power by the noise power is inversely proportional to the diagonal loading coefficient.

A diagonally loaded noise matrix is determined according to the diagonal loading coefficient and the noise matrix, and equalization is performed through the diagonally loaded noise matrix.

Optionally, the operation that a noise vector is determined according to a received pilot signal includes the operations as follows.

A pilot signal is received.

A first signal estimation is performed on the pilot signal to determine a pre-filtering channel estimate, and a second signal estimation is performed on the pilot signal to determine a post-filtering channel estimate.

The post-filtering channel estimate is subtracted from the pre-filtering channel estimate to obtain the noise vector.

Optionally, the operation that a noise matrix is determined according to the noise vector includes the operations as follows.

Conjugate multiplication is performed on the noise vector to determine the noise matrix.

Optionally, the operation that a diagonally loaded noise matrix is determined according to the diagonal loading coefficient and the noise matrix and equalization is performed through the diagonally loaded noise matrix includes the operations as follows.

A trace of the noise matrix is determined.

A correction amount is determined according to the diagonal loading coefficient and the trace of the noise matrix.

The noise matrix is diagonally loaded according to the correction amount to determine a diagonally loaded noise matrix, and equalization is performed through the diagonally loaded noise matrix.

An embodiment of the disclosure provides a diagonal loading device. The device includes: a noise vector calculation module, a noise matrix estimation module, a loading coefficient determining module, and an equalization module.

The noise vector calculation module is configured to determine a noise vector according to a received pilot signal.

The noise matrix estimation module is configured to determine a noise matrix according to the noise vector.

The loading coefficient determining module is configured to determine a diagonal loading coefficient according to a noise power and an interference power at a position where a user is located, a value obtained from dividing the interference power by the noise power is inversely proportional to the diagonal loading coefficient.

The equalization module is configured to determine a diagonally loaded noise matrix according to the diagonal loading coefficient and the noise matrix, and perform equalization through the diagonally loaded noise matrix.

Optionally, the noise vector calculation module is further configured to: perform a first signal estimation on the pilot signal to determine a pre-filtering channel estimate, and perform a second signal estimation on the pilot signal to determine a post-filtering channel estimate; and subtract the post-filtering channel estimate from the pre-filtering channel estimate to obtain the noise vector.

Optionally, the noise matrix estimation module is configured to perform conjugate multiplication on the noise vector to determine the noise matrix.

Optionally, the equalization module is configured to: determine a trace of the noise matrix, and determine a correction amount according to the diagonal loading coefficient and the noise matrix; and diagonally load the noise matrix according to the correction amount to determine a diagonally loaded noise matrix, and perform equalization through the diagonally loaded noise matrix.

An embodiment of the disclosure also provides a computer storage medium. The computer storage medium includes a set of instructions. When the instructions are executed, at least one processor is triggered to perform the foregoing diagonal loading method of the disclosure.

The embodiments of the disclosure provide a diagonal loading method and device, and a computer storage medium. A noise vector is determined according to a received pilot signal; a noise matrix is determined according to the noise vector; a diagonal loading coefficient is determined according to a noise power and an interference power at a position where a user is located, a value obtained from dividing the interference power by the noise power is inversely proportional to the diagonal loading coefficient; and a diagonally loaded noise matrix is determined according to the diagonal loading coefficient and the noise matrix, and equalization is performed through the diagonally loaded noise matrix. The solution provided in the embodiments of the disclosure may determine the value of diagonal loading and improve the performance of a communication system.

## BRIEF DESCRIPTION OF DRAWINGS

In the drawings, which are not necessarily to scale, similar reference numerals may describe similar components in different views. The similar reference numerals with different letter suffixes may indicate different examples of similar components. The drawings generally illustrate various embodiments discussed herein by way of example and not limitation.

FIG. 1 is a first flowchart of a diagonal loading method according to an embodiment of the disclosure.

FIG. 2 is a second flowchart of a diagonal loading method according to an embodiment of the disclosure.

FIG. 3 is a structural schematic diagram of a diagonal loading device according to an embodiment of the disclosure.

## DETAILED DESCRIPTION

The technical solutions in the embodiments of the disclosure will be clearly and completely described herein below with the drawings in the embodiments of the disclosure.

In various embodiments of the disclosure, a noise vector is determined according to a received pilot signal; a noise matrix is determined according to the noise vector; a diagonal loading coefficient is determined according to a noise power and an interference power at a position where a user is located; and a diagonally loaded noise matrix is determined according to the diagonal loading coefficient and the noise matrix, and equalization is performed through the diagonally loaded noise matrix.

First embodiment

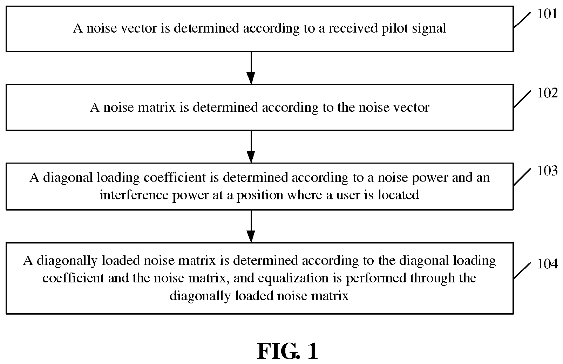

The embodiment of the disclosure provides a diagonal loading method. As shown in FIG. 1, the method may include the operations 101 to 104 as follows.

At operation 101, a noise vector is determined according to a received pilot signal.

The execution body of the diagonal loading method provided in the embodiment of the disclosure is a diagonal loading device, and the diagonal loading method may be applied to a communication system.

Specifically, the diagonal loading device may calculate a noise vector through a received pilot signal. The diagonal loading device receives a pilot signal, performs a first signal estimation on the pilot signal to determine a pre-filtering channel estimate, performs a second signal estimation on the pilot signal to determine a post-filtering channel estimate, and subtracts the post-filtering channel estimate from the pre-filtering channel estimate to obtain the noise vector.

The first signal estimation may be a Least Square (LS) signal estimation, the second signal estimation may be a Minimum Mean Square Error (MMSE) signal estimation, and the first signal estimation and the second signal estimation may also be other signal estimation methods, which are not specifically limited in the embodiment of the disclosure.

It is to be noted that some parameter values of the sending signal, such as amplitude, frequency, phase, delay and waveform, are estimated as accurately as possible at a receiving end by using the received interfered sending signal sequence, and are called a signal estimate or a parameter estimate.

At operation 102, a noise matrix is determined according to the noise vector.

Specifically, the diagonal loading device obtains the noise matrix by conjugate multiplication of the noise vector, as shown below:

$$R_n = \mathrm{NI}^{\mathrm{T}}\left(k, ka_{Rx}\right) \times conj\left(\mathrm{NI}\left(k, ka_{Rx}\right)\right)$$

where the dimension of $R_n$ is $Ka_{Rx} \times Ka_{Rx}$, and $Ka_{Rx}$ is the total number of antennas.

It is to be noted that a function conj(x) is a conjugate value for finding x.

At operation 103, a diagonal loading coefficient is determined according to a noise power and an interference power at a position where a user is located.

Specifically, the diagonal loading device acquires the noise power and the interference power at the position where the user is located, and determines a diagonal loading coefficient according to the noise power and the interference power at the position where the user is located. The diagonal loading coefficient is inversely proportional to the interference power/noise power, i.e., diagonal loading coefficient * interference power / noise power = constant. As the interference power is larger, the diagonal loading coefficient is smaller, and as the noise power is higher, the diagonal loading coefficient is larger.

It is assumed that the diagonal loading coefficient is $B$, the interference power is $Ps$, and the noise power is $NI$. $B$, $Ps$ and $NI$ satisfy the following relationship:

$$B = f\left(\frac{Ps}{NI}\right)$$

where $f$ is an inverse proportional function, which can be understood as $B*NI/P_S$=constant.

At operation 104, a diagonally loaded noise matrix is determined according to the diagonal loading coefficient and the noise matrix, and equalization is performed through the diagonally loaded noise matrix.

Specifically, the diagonal loading device determines a trace of the noise matrix, determines a correction amount according to the diagonal loading coefficient and the noise matrix, diagonally loads the noise matrix according to the correction amount to determine a diagonally loaded noise matrix, and performs equalization through the diagonally loaded noise matrix.

Exemplarily, it is assumed that the noise power is 1, the signal power is 4, and the interference power is 4. The specific implementation manner is as follows:
The diagonal loading device calculates a noise vector through a pilot. Specifically, a pre-filtering channel estimate may be obtained by performing an LS signal estimation through the received pilot signal, a post-filtering channel estimate may be obtained by performing an MMSE signal estimation through the received pilot signal, and a noise vector $NI(k, ka_{Rx})$ may be obtained by subtracting the post-filtering channel estimate from the pre-filtering channel estimate, where $k$ is a carrier index, and $ka_{Rx}$ is an antenna index.

The diagonal loading device estimates a noise matrix according to the noise vector. Specifically, the noise matrix is obtained by conjugate multiplication of the noise vector, as shown below:

$$R_n = \mathrm{NI}^{\mathrm{T}}\left(k, ka_{Rx}\right) \times conj\left(\mathrm{NI}\left(k, ka_{Rx}\right)\right)$$

where the dimension of $R_n$ is $Ka_{Rx} \times Ka_{Rx}$, and $Ka_{Rx}$ is the total number of antennas.

The diagonal loading device determines the diagonal loading coefficient according to the noise power and the interference power at the position where the user is located. The diagonal loading coefficient is inversely proportional to the interference power/noise power. As the interference power is larger, the diagonal loading coefficient is smaller, and as the noise power is higher, the diagonal loading coefficient is larger. It is assumed that the diagonal loading coefficient is $B$, the interference power is $Ps$, and the noise power is $NI$.

$B$, $Ps$, and $NI$ satisfy the following relationship:

$$B = 0.03 \times \frac{NI}{Ps}$$

The value of $B$ is 0.0075.

The diagonal loading device performs equalization by using the diagonally loaded noise matrix. A trace $tr(R_n)$ of the noise matrix is calculated, a correction amount $\gamma = B \times tr(R_n)$ is calculated according to the diagonal loading coefficient, and diagonal loading $\hat{R}_n = R_n + \gamma \times I$ is performed finally, where $I$ represents a unit matrix.

The MMSE equalization method is adopted with the principle as follows:

$$s = \frac{H\hat{R}_n^{-1}Y}{H\hat{R}_n^{-1}H + I}$$

where $s$ is data after equalization, $H$ is a post-filtering channel estimate, and $Y$ is a received data vector.

According to the diagonal loading method provided in the embodiment of the disclosure, a noise vector is calculated by a pilot, a noise matrix is estimated according to the noise vector, then a diagonal loading coefficient is determined according to a noise power and an interference power at a position where a user is located, and equalization is performed by using a diagonally loaded noise matrix finally. The diagonal loading method provided in the embodiments of the disclosure may determine the value of diagonal loading and improve the performance of a communication system.

Second embodiment

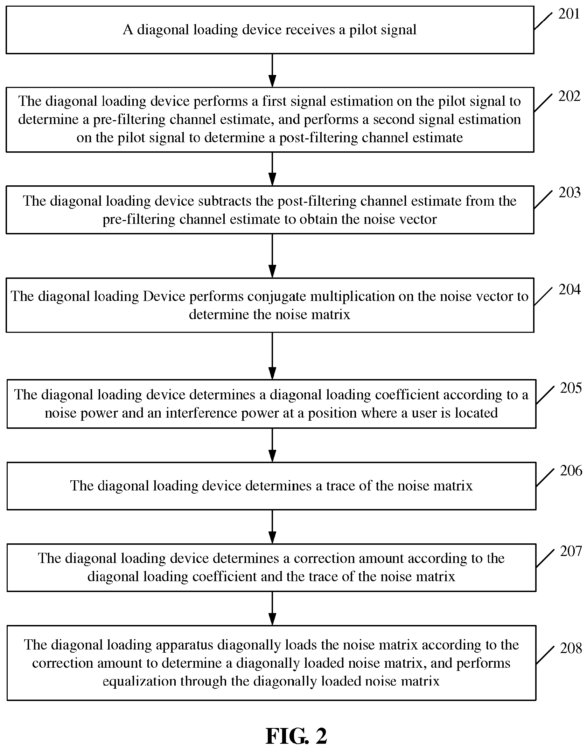

The embodiment of the disclosure provides a diagonal loading method. As shown in FIG. 2, the method may include the operations 201 to 208 as follows.

At operation 201, a diagonal loading device receives a pilot signal.

The diagonal loading method provided in the embodiment of the disclosure may be applied to a communication system.

At operation 202, the diagonal loading device performs a first signal estimation on the pilot signal to determine a pre-filtering channel estimate, and performs a second signal estimation on the pilot signal to determine a post-filtering channel estimate.

Specifically, a pre-filtering channel estimate may be obtained by performing, by the diagonal loading device, an LS signal estimation through the received pilot signal, and a post-filtering channel estimate may be obtained by performing an MMSE signal estimation through the received pilot signal. The diagonal loading device may also obtain the pre-filtering channel estimate and the post-filtering channel estimate by other signal estimation methods, which are not specifically limited in the embodiment of the disclosure.

It is to be noted that some parameter values of the sending signal, such as amplitude, frequency, phase, delay and waveform, are estimated as accurately as possible at a receiving end by using the received interfered sending signal sequence, and are called a signal estimate or a parameter estimate.

At operation 203, the diagonal loading device subtracts the post-filtering channel estimate from the pre-filtering channel estimate to obtain the noise vector.

Specifically, a noise vector NI($k,ka_{Rx}$) may be obtained by subtracting, by the diagonal loading device, the post-filtering channel estimate from the pre-filtering channel estimate, where $k$ is a carrier index, and $ka_{Rx}$ is an antenna index.

At operation 204, the diagonal loading device performs conjugate multiplication on the noise vector to determine the noise matrix.

Specifically, the diagonal loading device obtains the noise matrix by conjugate multiplication of the noise vector, as shown below:

$$R_n = \mathrm{N}\,\mathrm{I}^{\mathrm{T}}\left(k, ka_{Rx}\right) \times conj\left(\mathrm{N}\,\mathrm{I}\left(k, ka_{Rx}\right)\right)$$

where the dimension of $R_n$ is $Ka_{Rx} \times Ka_{Rx}$, and $Ka_{Rx}$ is the total number of antennas.

At operation 205, the diagonal loading device determines a diagonal loading coefficient according to a noise power and an interference power at a position where a user is located.

Specifically, the diagonal loading device acquires the noise power and the interference power at the position where the user is located, and determines a diagonal loading coefficient according to the noise power and interference power at the position where the user is located. The diagonal loading coefficient is inversely proportional to the interference power/noise power. As the interference power is larger, the diagonal loading coefficient is smaller, and as the noise power is higher, the diagonal loading coefficient is larger.

It is assumed that the diagonal loading coefficient is $B$, the interference power is $Ps$, and the noise power is $NI$. $B$, $Ps$ and $NI$ satisfy the following relationship:

$$B = f\left(\frac{Ps}{NI}\right)$$

where $f$ is an inverse proportional function.

At operation 206, the diagonal loading device determines a trace of the noise matrix.

At operation 207, the diagonal loading device determines a correction amount according to the diagonal loading coefficient and the trace of the noise matrix.

At operation 208, the diagonal loading device diagonally loads the noise matrix according to the correction amount to determine a diagonally loaded noise matrix, and performs equalization through the diagonally loaded noise matrix.

Specifically, the diagonal loading device performs equalization by using the diagonally loaded noise matrix.

Firstly, a trace $tr(R_n)$ of the noise matrix is calculated.

Then, a correction amount $\gamma = B \times tr(R_n)$ is calculated according to the diagonal loading coefficient.

Finally, diagonal loading $\hat{R}_n = R_n + \gamma \times I$ is performed, where $I$ represents a unit matrix.

The MMSE equalization method is adopted for equalization with the principle as follows:

$$s = \frac{H\hat{R}_n^{-1}Y}{H\hat{R}_n^{-1}H + I}$$

where $s$ is data after equalization, $H$ is a post-filtering channel estimate, and $Y$ is a received data vector.

Exemplarily, it is assumed that the noise power is 1, the signal power is 6, and the interference power is 24. The specific implementation manner is as follows: The diagonal loading device calculates a noise vector through a pilot. Specifically, a pre-filtering channel estimate may be obtained by performing, by the diagonal loading device, an LS signal estimation through the received pilot signal, and a post-filtering channel estimate may be obtained by performing an MMSE signal estimation through the received pilot signal. A noise vector $NI(k, ka_{Rx})$ may be obtained by subtracting the post-filtering channel estimate from the pre-filtering channel estimate, where $k$ is a carrier index, and $ka_{Rx}$ is an antenna index.

The diagonal loading device estimates a noise matrix according to the noise vector. Specifically, the diagonal loading device obtains the noise matrix by conjugate multiplication of the noise vector, as shown below:

$$R_n = NI^T(k, ka_{Rx}) \times conj(NI(k, ka_{Rx}))$$

where the dimension of $R_n$ is $Ka_{Rx} \times Ka_{Rx}$, and $Ka_{Rx}$ is the total number of antennas.

The diagonal loading device determines a diagonal loading coefficient according to a noise power and an interference power at a position where a user is located. The diagonal loading coefficient is inversely proportional to the interference power/noise power. As the interference power is larger, the diagonal loading coefficient is smaller, and as the noise power is higher, the diagonal loading coefficient is larger. It is assumed that the diagonal loading coefficient is $B$, the interference power is $Ps$, and the noise power is $NI$. $B$, $Ps$ and $NI$ satisfy the following relationship:

$$B = 0.06 \times \frac{NI}{Ps}$$

The value of $B$ is 0.0025.

The diagonal loading device performs equalization by using the diagonally loaded noise matrix. A trace $tr(R_n)$ of the noise matrix is calculated, a correction amount $\gamma = B \times tr(R_n)$ is calculated according to the diagonal loading coefficient, and diagonal loading $\hat{R}_n = R_n + \gamma \times I$ is performed finally, where $I$ represents a unit matrix. The MMSE equalization method is adopted for equalization with the principle as follows:

$$s = \frac{H\hat{R}_n^{-1}Y}{H\hat{R}_n^{-1}H + I}$$

where $s$ is data after equalization, $H$ is a post-filtering channel estimate, and $Y$ is a received data vector.

According to the diagonal loading method provided in the embodiment of the disclosure, a noise vector is calculated by a pilot, a noise matrix is estimated according to the noise vector, then a diagonal loading coefficient is determined according to a noise power and an interference power at a position where a user is located, and equalization is performed by using a diagonally loaded noise matrix finally. The diagonal loading method provided in the embodiments of the disclosure may determine the value of diagonal loading and improve the performance of a communication system.

Third embodiment

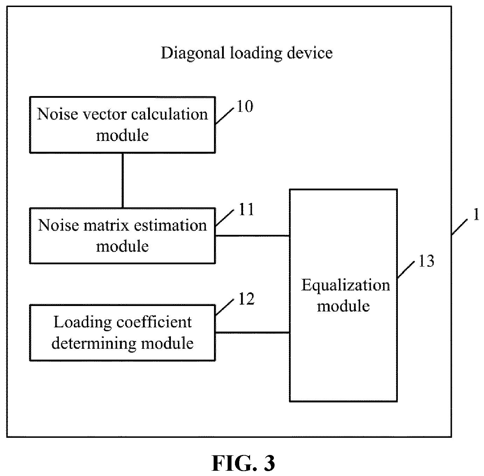

The embodiment of the disclosure provides a diagonal loading device 1. As shown in FIG. 3, the device 1 may include: a noise vector calculation module 10, a noise matrix estimation module 11, a loading coefficient determining module 12, and an equalization module 13.

The noise vector calculation module 10 is configured to determine a noise vector according to a received pilot signal.

The noise matrix estimation module 11 is configured to determine a noise matrix according to the noise vector.

The loading coefficient determining module 12 is configured to determine a diagonal loading coefficient according to a noise power and an interference power at a position where a user is located.

The equalization module 13 is configured to determine a diagonally loaded noise matrix according to the diagonal loading coefficient and the noise matrix, and perform equalization through the diagonally loaded noise matrix.

In an embodiment, the noise vector calculation module 10 is further configured to: perform a first signal estimation on the pilot signal to determine a pre-filtering channel estimate, and perform a second signal estimation on the pilot signal to determine a post-filtering channel estimate; and subtract the post-filtering channel estimate from the pre-filtering channel estimate to obtain the noise vector.

In an embodiment, the noise matrix estimation module 11 is specifically configured to perform conjugate multiplication on the noise vector to determine the noise matrix.

In an embodiment, the equalization module 13 is specifically configured to: determine a trace of the noise matrix, and determine a correction amount according to the diagonal loading coefficient and the noise matrix; and diagonally load the noise matrix according to the correction amount to determine a diagonally loaded noise matrix, and perform equalization through the diagonally loaded noise matrix.

In an embodiment, a value obtained from dividing the interference power by the noise power is inversely proportional to the diagonal loading coefficient.

Specifically, for a detailed description of the diagonal loading device provided by the embodiment of the disclosure, reference may be made to the description of the diagonal loading method in the second embodiment and the second embodiment, and details are not described herein again.

In practical applications, the noise vector calculation module 10, the noise matrix estimation module 11, the loading coefficient determining module 12 and the equalization module 13 may be implemented by a Central Processing Unit (CPU), a Micro Control Unit (MCU), a Digital Signal Processor (DSP) or a Field-Programmable Gate Array (FPGA) in the diagonal loading device 1.

The embodiment of the disclosure provides a diagonal loading device. The device includes: a noise vector calculation module, a noise matrix estimation module, a loading coefficient determining module, and an equalization module. The noise vector calculation module is configured to calculate a noise vector by a pilot; the noise matrix estimation module is configured to estimate a noise matrix according to the noise vector; the loading coefficient determining module is configured to determine a diagonal loading coefficient according to a noise power and an interference power at a position where a user is located; and the equalization module is configured to perform equalization by using a diagonally loaded noise matrix. The diagonal loading device provided in the embodiments of the disclosure may determine the value of diagonal loading and improve the performance of a communication system.

A person skilled in the art should understand that the embodiments of the disclosure may be provided as a method, a system or a computer program product. Thus, forms of hardware embodiments, software embodiments or embodiments integrating software and hardware may be adopted in the disclosure. Moreover, a form of the computer program product implemented on one or more computer available storage media (including, but not limited to, a disk memory, an optical memory and the like) containing computer available program codes may be adopted in the disclosure.

The disclosure is described with reference to flowcharts and/or block diagrams of the method, the device (system) and the computer program product according to the embodiments of the disclosure. It is to be understood that each flow and/or block in the flowcharts and/or the block diagrams and a combination of the flows and/or the blocks in the flowcharts and/or the block diagrams may be implemented by computer program instructions. These computer program instructions may be provided for a general computer, a dedicated computer, an embedded processor or processors of other programmable data processing devices to generate a machine, so that an device for achieving functions designated in one or more flows of the flowcharts and/or one or more blocks of the block diagrams is generated via instructions executed by the computers or the processors of the other programmable data processing devices.

These computer program instructions may also be stored in a computer readable memory capable of guiding the computers or the other programmable data processing devices to work in a specific mode, so that a manufactured product including an instruction device is generated via the instructions stored in the computer readable memory, and the instruction device achieves the functions designated in one or more flows of the flowcharts and/or one or more blocks of the block diagrams.

These computer program instructions may also be loaded to the computers or the other programmable data processing devices, so that processing implemented by the computers is generated by executing a series of operation steps on the computers or the other programmable devices, and therefore the instructions executed on the computers or the other programmable devices provide a step of achieving the functions designated in one or more flows of the flowcharts and/or one or more blocks of the block diagrams.

Based on this, the embodiment of the disclosure also provides a computer storage medium. The computer storage medium includes a set of instructions. When the instructions are executed, at least one processor is triggered to perform the diagonal loading method described in the embodiment of the disclosure.

The above is only the preferred embodiment of the disclosure and is not intended to limit the scope of protection of the disclosure.

## Claims

1. A diagonal loading method, **characterized by** comprising:

    determining a noise vector according to a received pilot signal (101);
    determining a noise matrix according to the noise vector (102);
    determining a diagonal loading coefficient according to a noise power and an interference power at a position where a user is located (103), wherein a value obtained from dividing the interference power by the noise power is inversely proportional to the diagonal loading coefficient; and
    determining a diagonally loaded noise matrix according to the diagonal loading coefficient and the noise matrix, and performing equalization through the diagonally loaded noise matrix (104).

2. The method according to claim 1, wherein determining the noise vector according to the received pilot signal comprises:

    receiving a pilot signal;
    performing a first signal estimation on the pilot signal to determine a pre-filtering channel estimate, and performing a second signal estimation on the pilot signal to determine a post-filtering channel estimate; and
    subtracting the post-filtering channel estimate from the pre-filtering channel estimate to obtain the noise vector.

3. The method according to claim 1, wherein determining the noise matrix according to the noise vector comprises:

performing conjugate multiplication on the noise vector to determine the noise matrix.

4. The method according to claim 1, wherein the operation of determining a diagonally loaded noise matrix according to the diagonal loading coefficient and the noise matrix and performing equalization through the diagonally loaded noise matrix comprises:

determining a trace of the noise matrix;
determining a correction amount according to the diagonal loading coefficient and the trace of the noise matrix; and
diagonally loading the noise matrix according to the correction amount to determine a diagonally loaded noise matrix, and performing equalization through the diagonally loaded noise matrix.

5. A diagonal loading device (1), **characterized by** comprising: a noise vector calculation module (10), a noise matrix estimation module (111), a loading coefficient determining module (12), and an equalization module (13),

wherein the noise vector calculation module (10) is configured to determine a noise vector according to a received pilot signal;
the noise matrix estimation module (11) is configured to determine a noise matrix according to the noise vector;
the loading coefficient determining module (12) is configured to determine a diagonal loading coefficient according to a noise power and an interference power at a position where a user is located, wherein a value obtained from dividing the interference power by the noise power is inversely proportional to the diagonal loading coefficient; and
the equalization module (13) is configured to determine a diagonally loaded noise matrix according to the diagonal loading coefficient and the noise matrix, and perform equalization through the diagonally loaded noise matrix.

6. The device (1) according to claim 5, wherein the noise vector calculation module (10) is further configured to: perform a first signal estimation on the pilot signal to determine a pre-filtering channel estimate, and perform a second signal estimation on the pilot signal to determine a post-filtering channel estimate; and subtract the post-filtering channel estimate from the pre-filtering channel estimate to obtain the noise vector.

7. The device (1) according to claim 5, wherein the noise matrix estimation module (11) is configured to perform conjugate multiplication on the noise vector to determine the noise matrix.

8. The device (1) according to claim 5, wherein the equalization module (13) is configured to: determine a trace of the noise matrix, and determine a correction amount according to the diagonal loading coefficient and the trace of the noise matrix; and diagonally load the noise matrix according to the correction amount to determine a diagonally loaded noise matrix, and perform equalization through the diagonally loaded noise matrix.

9. A computer storage medium having stored thereon a set of instructions that, when executed by at least one processor, cause the processor to perform the diagonal loading method according to any one of claims 1 to 4.

## Patentansprüche

1. Diagonales Ladeverfahren, **dadurch gekennzeichnet, dass** es umfasst:

ein Bestimmen eines Rauschvektors gemäß einem empfangenen Pilotsignal (101),
ein Bestimmen einer Rauschmatrix gemäß dem Rauschvektor (102),
ein Bestimmen eines diagonalen Ladekoeffizienten gemäß einer Rauschleistung und einer Interferenzleistung an einer Position, an der sich ein Benutzer befindet (103), wobei ein Wert, der aus einem Dividieren der Interferenzleistung durch die Rauschleistung erhalten wird, umgekehrt proportional zu dem diagonalen Ladekoeffizienten ist, und
ein Bestimmen einer diagonal geladenen Rauschmatrix gemäß dem diagonalen Ladekoeffizienten und der Rauschmatrix, und ein Durchführen einer Entzerrung durch die diagonal geladene Rauschmatrix (104).

2. Verfahren nach Anspruch 1, wobei das Bestimmen des Rauschvektors gemäß dem empfangenen Pilotsignal umfasst:

ein Empfangen eines Pilotsignals,
ein Durchführen einer ersten Signalschätzung an dem Pilotsignal, um eine Vorfilterungskanalschätzung zu bestimmen, und ein Durchführen einer zweiten Signalschätzung an dem Pilotsignal, um eine Nachfilterungskanalschätzung zu bestimmen, und
ein Subtrahieren der Nachfilterungskanalschätzung von der Vorfilterungskanalschätzung, um den Rauschvektor zu erhalten.

**3.** Verfahren nach Anspruch 1, wobei das Bestimmen der Rauschmatrix gemäß dem Rauschvektor umfasst:
ein Durchführen einer konjugierten Multiplikation mit dem Rauschvektor, um die Rauschmatrix zu bestimmen.

**4.** Verfahren nach Anspruch 1, wobei der Vorgang des Bestimmens einer diagonal geladenen Rauschmatrix gemäß dem diagonalen Ladekoeffizienten und der Rauschmatrix und des Durchführens der Entzerrung mittels der diagonal geladenen Rauschmatrix umfasst:

ein Bestimmen einer Spur der Rauschmatrix, ein Bestimmen eines Korrekturbetrags gemäß dem diagonalen Ladekoeffizienten und der Spur der Rauschmatrix, und
ein diagonales Laden der Rauschmatrix gemäß dem Korrekturbetrag, um eine diagonal geladene Rauschmatrix zu bestimmen, und ein Durchführen einer Entzerrung durch die diagonal geladene Rauschmatrix.

**5.** Diagonale Ladevorrichtung (1), **dadurch gekennzeichnet, dass** diese ein Rauschvektor-Berechnungsmodul (10), ein Rauschmatrix-Schätzmodul (111), ein Ladekoeffizienten-Bestimmungsmodul (12) und ein Entzerrungsmodul (13) aufweist, wobei

das Rauschvektor-Berechnungsmodul (10) ausgestaltet ist, um einen Rauschvektor gemäß einem empfangenen Pilotsignal zu bestimmen, das Rauschmatrix-Schätzmodul (11) ausgestaltet ist, um eine Rauschmatrix gemäß dem Rauschvektor zu bestimmen,
das Ladekoeffizienten-Bestimmungsmodul (12) ausgestaltet ist, um einen diagonalen Ladekoeffizienten gemäß einer Rauschleistung und einer Interferenzleistung an einer Position, an der sich ein Benutzer befindet, zu bestimmen, wobei ein Wert, der durch ein Dividieren der Interferenzleistung durch die Rauschleistung erhalten wird, umgekehrt proportional zu dem diagonalen Ladekoeffizienten ist, und
das Entzerrungsmodul (13) ausgestaltet ist, um eine diagonal geladene Rauschmatrix gemäß dem diagonalen Ladekoeffizienten und der Rauschmatrix zu bestimmen und eine Entzerrung durch die diagonal geladene Rauschmatrix durchzuführen.

**6.** Vorrichtung (1) nach Anspruch 5, wobei das Rauschvektor-Berechnungsmodul (10) ferner ausgestaltet ist, um eine erste Signalschätzung an dem Pilotsignal durchzuführen, um eine Vorfilterungskanalschätzung zu bestimmen, und um eine zweite Signalschätzung an dem Pilotsignal durchzuführen, um eine Nachfilterungskanalschätzung zu bestimmen, und um die Nachfilterungskanalschätzung von der Vorfilterungskanalschätzung zu subtrahieren, um den Rauschvektor zu erhalten.

**7.** Vorrichtung (1) nach Anspruch 5, wobei das Rauschmatrix-Schätzmodul (11) ausgestaltet ist, um eine konjugierte Multiplikation mit dem Rauschvektor durchzuführen, um die Rauschmatrix zu bestimmen.

**8.** Vorrichtung (1) nach Anspruch 5, wobei das Entzerrungsmodul (13) ausgestaltet ist, um eine Spur der Rauschmatrix zu bestimmen und um einen Korrekturbetrag gemäß dem diagonalen Ladekoeffizienten und gemäß der Spur der Rauschmatrix zu bestimmen, und um die Rauschmatrix gemäß dem Korrekturbetrag diagonal zu laden, um eine diagonal geladene Rauschmatrix zu bestimmen, und um eine Entzerrung durch die diagonal geladene Rauschmatrix durchzuführen.

**9.** Computerspeichermedium, auf dem ein Satz an Anweisungen gespeichert ist, die, wenn sie von mindestens einem Prozessor ausgeführt werden, den Prozessor veranlassen, das diagonale Ladeverfahren nach einem der Ansprüche 1 bis 4 durchzuführen.

**Revendications**

**1.** Procédé de chargement diagonal, **caractérisé en ce qu'**il comprend :

la détermination d'un vecteur de bruit en fonction d'un signal pilote reçu (101) ;
la détermination d'une matrice de bruit en fonction du vecteur de bruit (102) ;
la détermination d'un coefficient de chargement diagonal en fonction d'une puissance de bruit et d'une puissance d'interférence à une position où un utilisateur est positionné (103), dans lequel une valeur obtenue à partir de la division de la puissance d'interférence par la puissance de bruit est inversement proportionnelle au coefficient de chargement diagonal ; et
la détermination d'une matrice de bruit chargée diagonalement en fonction du coefficient de chargement diagonal et de la matrice de bruit, et la réalisation d'une égalisation par l'intermédiaire de la matrice de bruit chargée diagonalement (104).

**2.** Procédé selon la revendication 1, dans lequel la détermination du vecteur de bruit en fonction du signal pilote reçu comprend :

la réception d'un signal pilote ;

la réalisation d'une première estimation de signal sur le signal pilote pour déterminer une estimation de canal de pré-filtrage, et la réalisation d'une deuxième estimation de signal sur le signal pilote pour déterminer une estimation de canal de post-filtrage ; et

la soustraction de l'estimation de canal de post-filtrage de l'estimation de canal de pré-filtrage pour obtenir le vecteur de bruit.

3. Procédé selon la revendication 1, dans lequel la détermination de la matrice de bruit en fonction du vecteur de bruit comprend :

la réalisation d'une multiplication conjuguée sur le vecteur de bruit pour déterminer la matrice de bruit.

4. Procédé selon la revendication 1, dans lequel l'opération de détermination d'une matrice de bruit chargée diagonalement en fonction du coefficient de chargement diagonal et de la matrice de bruit et la réalisation d'une égalisation par l'intermédiaire de la matrice de bruit chargée diagonalement comprend :

la détermination d'une trace de la matrice de bruit ;

la détermination d'une quantité de correction en fonction du coefficient de chargement diagonal et de la trace de la matrice de bruit ; et

le chargement diagonal de la matrice de bruit en fonction de la quantité de correction pour déterminer une matrice de bruit chargée diagonalement, et la réalisation d'une égalisation par l'intermédiaire de la matrice de bruit chargée diagonalement.

5. Dispositif de chargement diagonal (1), **caractérisé en ce qu'**il comprend : un module de calcul de vecteur de bruit (10), un module d'estimation de matrice de bruit (111), un module de détermination de coefficient de chargement (12) et un module d'égalisation (13),

dans lequel le module de calcul de vecteur de bruit (10) est configuré pour déterminer un vecteur de bruit en fonction d'un signal pilote reçu ;

le module d'estimation de matrice de bruit (11) est configuré pour déterminer une matrice de bruit en fonction du vecteur de bruit ;

le module de détermination de coefficient de chargement diagonal (12) est configuré pour déterminer un coefficient de chargement diagonal en fonction d'une puissance de bruit et d'une puissance d'interférence au niveau d'une position où se trouve un utilisateur, dans lequel une valeur obtenue à partir de la division de la puissance d'interférence par la puissance de bruit est inversement proportionnelle au coefficient de chargement diagonal ; et

le module d'égalisation (13) est configuré pour déterminer une matrice de bruit chargée diagonalement en fonction du coefficient de chargement diagonal et de la matrice de bruit, et réaliser une égalisation par l'intermédiaire de la matrice de bruit chargée diagonalement.

6. Dispositif (1) selon la revendication 5, dans lequel le module de calcul de vecteur de bruit (10) est en outre configuré pour : réaliser une première estimation de signal sur le signal pilote pour déterminer une estimation de canal de pré-filtrage, et réaliser une deuxième estimation de signal sur le signal pilote pour déterminer une estimation de canal de post-filtrage ; et soustraire l'estimation de canal de post-filtrage de l'estimation de canal de pré-filtrage pour obtenir le vecteur de bruit.

7. Dispositif (1) selon la revendication 5, dans lequel le module d'estimation de matrice de bruit (11) est configuré pour réaliser une multiplication conjuguée sur le vecteur de bruit pour déterminer la matrice de bruit.

8. Dispositif (1) selon la revendication 5, dans lequel le module d'égalisation (13) est configuré pour : déterminer une trace de la matrice de bruit, et déterminer une quantité de correction en fonction du coefficient de chargement diagonal et de la trace de la matrice de bruit ; et charger diagonalement la matrice de bruit en fonction de la quantité de correction pour déterminer une matrice de bruit chargée diagonalement, et réaliser une égalisation par l'intermédiaire de la matrice de bruit chargée diagonalement.

9. Support de stockage informatique sur lequel est stocké un ensemble d'instructions qui, lorsqu'elles sont exécutées par au moins un processeur, amènent le processeur à réaliser le procédé de chargement diagonal selon l'une quelconque des revendications 1 à 4.

A noise vector is determined according to a received pilot signal ⟋ 101

↓

A noise matrix is determined according to the noise vector ⟋ 102

↓

A diagonal loading coefficient is determined according to a noise power and an interference power at a position where a user is located ⟋ 103

↓

A diagonally loaded noise matrix is determined according to the diagonal loading coefficient and the noise matrix, and equalization is performed through the diagonally loaded noise matrix ⟋ 104

**FIG. 1**

```
┌─────────────────────────────────────────────────────────────────┐
│         A diagonal loading device receives a pilot signal          │╱ 201
└─────────────────────────────────────────────────────────────────┘
                                  │
                                  ▼
┌─────────────────────────────────────────────────────────────────┐
│ The diagonal loading device performs a first signal estimation on the pilot signal to │╱ 202
│ determine a pre-filtering channel estimate, and performs a second signal estimation │
│      on the pilot signal to determine a post-filtering channel estimate             │
└─────────────────────────────────────────────────────────────────┘
                                  │
                                  ▼
┌─────────────────────────────────────────────────────────────────┐
│ The diagonal loading device subtracts the post-filtering channel estimate from the │╱ 203
│         pre-filtering channel estimate to obtain the noise vector                   │
└─────────────────────────────────────────────────────────────────┘
                                  │
                                  ▼
┌─────────────────────────────────────────────────────────────────┐
│ The diagonal loading Device performs conjugate multiplication on the noise vector to │╱ 204
│                        determine the noise matrix                                   │
└─────────────────────────────────────────────────────────────────┘
                                  │
                                  ▼
┌─────────────────────────────────────────────────────────────────┐
│ The diagonal loading device determines a diagonal loading coefficient according to a │╱ 205
│      noise power and an interference power at a position where a user is located     │
└─────────────────────────────────────────────────────────────────┘
                                  │
                                  ▼
┌─────────────────────────────────────────────────────────────────┐
│    The diagonal loading device determines a trace of the noise matrix              │╱ 206
└─────────────────────────────────────────────────────────────────┘
                                  │
                                  ▼
┌─────────────────────────────────────────────────────────────────┐
│ The diagonal loading device determines a correction amount according to the         │╱ 207
│         diagonal loading coefficient and the trace of the noise matrix              │
└─────────────────────────────────────────────────────────────────┘
                                  │
                                  ▼
┌─────────────────────────────────────────────────────────────────┐
│ The diagonal loading apparatus diagonally loads the noise matrix according to the   │╱ 208
│ correction amount to determine a diagonally loaded noise matrix, and performs        │
│        equalization through the diagonally loaded noise matrix                      │
└─────────────────────────────────────────────────────────────────┘
```

**FIG. 2**

Diagonal loading device

Noise vector calculation module /10

Noise matrix estimation module /11

Loading coefficient determining module /12

Equalization module /13

/1

**FIG. 3**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 2009310724 A1

- WO 2012057666 A1

### Non-patent literature cited in the description

- Robust Adaptive Beamforming in Software Defined Radio with Adaptive Diagonal Loading. **MILCOM. MILITARY COMMUNICATIONS CONFERENCE.** IEEE, 17 October 2005, 1-6
- **S. KALSON.** Adaptive detection with diagonal loading. IEEE, 1990

- Efficient method to determine diagonal value. PROCEEDINGS OF INTERNATIONAL CONFERENCE ON ACOUSTICS, SPEECH AND SIGNAL PROCESSING. IEEE, 06 April 2003, vol. 5